# FASCICULE DE BREVET EUROPEEN

(11) **EP 3 455 481 B1**
(45) Date de publication et mention de la délivrance du brevet: **26.01.2022**
(21) Numéro de dépôt: 17717371.3
(22) Date de dépôt: 10.04.2017
(51) Int. Cl.: F02D 41/10, F02B 37/16, F02B 37/20

(54) **METHODE DE CONTROLE DE LA QUANTITE D'AIR INTRODUIT A L'ADMISSION D'UN MOTEUR A COMBUSTION INTERNE SURALIMENTE PAR UN TURBOCOMPRESSEUR A SIMPLE ENTREE**
VERFAHREN ZUR STEUERUNG DER IN DEN EINLASS EINES AUFGELADENEN VERBRENNUNGSMOTORS ZUGEFÜHRTEN LUFTMENGE DURCH EINEN TURBOVERDICHTER MIT EINZELEINLASS
METHOD FOR CONTROLLING THE QUANTITY OF AIR INTRODUCED TO THE INTAKE OF A SUPERCHARGED INTERNAL COMBUSTION ENGINE BY A SINGLE-INLET TURBOCOMPRESSOR

(30) Priorité: 11.05.2016 FR 1654191
(43) Date de publication de la demande: 20.03.2019
(73) Titulaire: IFP Energies nouvelles, 92852 Rueil-Malmaison (FR)
(72) Inventeur: COLLIOU, Thierry, 38138 Les Cotes d'Arey (FR); ZACCARDI, Jean-Marc, 69008 Lyon (FR); BAUDRAND, Olivier, 75019 Paris (FR)
(86) Numéro de dépôt international: PCT/EP2017/058530
(87) Numéro de publication internationale: WO 2017/194252

(56) Documents cités:
- EP-A2- 0 038 232
- WO-A1-2015/140989
- DE-A1- 10 315 148
- FR-A1- 2 864 994
- FR-A1- 2 907 848

## Description

La présente invention se rapporte à une méthode de contrôle d'un dispositif d'introduction de la quantité d'air à l'admission d'un moteur à combustion interne suralimenté par un turbocompresseur à simple entrée, notamment d'un moteur stationnaire ou pour un véhicule automobile ou industriel.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur à simple entrée, ce dernier comprend une turbine rotative, munie d'une seule entrée, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur, voir aussi FR 2 907 848 A1, DE 103 15 148 A1 et WO 2015/140989 A1.

Par cela, l'air comprimé a une densité plus élevée ce qui permet d'accroitre la quantité d'air contenue dans la chambre de combustion.

Ce type de moteur suralimenté, bien que donnant satisfaction, présente néanmoins des inconvénients non négligeables.

En effet, le débit de l'air comprimé qui est admis à l'entrée de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air, et amène une diminution du rendement global de la suralimentation.

La présente invention se propose de remédier aux inconvénients mentionnés ci-dessus grâce à une méthode de contrôle d'un dispositif d'introduction d'une quantité d'air à l'admission d'un moteur à combustion interne suralimenté qui permet de répondre à toutes les demandes de puissance du moteur, et en particulier dans les phases de fonctionnement transitoire.

L'invention présente permet de réaliser et de gérer un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

Ainsi, la présente invention concerne une méthode de contrôle de la quantité d'air introduit à l'admission d'un moteur à combustion interne suralimenté, ledit moteur comprenant une sortie de gaz d'échappement reliée à un collecteur d'échappement, comprenant un dispositif de suralimentation comportant un turbocompresseur avec une turbine à simple entrée connectée à ladite sortie de gaz d'échappement ainsi qu'un compresseur d'air extérieur, et un conduit de transfert partiel de l'air comprimé du compresseur vers l'entrée de la turbine, caractérisée en ce que l'on relie le conduit de transfert partiel à l'entrée de la turbine, ledit conduit portant un moyen de vannage proportionnel, et en ce que l'on contrôle la circulation de l'air comprimé dans ce conduit pendant des phases de fonctionnement transitoire selon des stratégies appliquées audit moyen de vannage, et déterminées en fonction des caractéristiques des phases stabilisées.

On peut disposer en outre un clapet antiretour sur le conduit.

On peut chauffer l'air comprimé qui circule dans le conduit de transfert.

Pour une stratégie de contrôle selon l'invention, on effectue les étapes suivantes :
- à partir d'un état de réglage d'ouverture du moyen de vannage pour un état stabilisé initial,
- on diminue le réglage selon un gradient déterminé, jusqu'à une valeur maintenue un temps t,
- on augmente ledit réglage selon un gradient déterminé pour atteindre le réglage d'ouverture du moyen de vannage pour un état stabilisé final.

L'état initial peut être à faible charge et l'état final à forte charge.

Les états de réglage d'ouverture du moyen de vannage pour les états stabilisés initial et final peuvent être identiques.

Les autres caractéristiques et avantages de l'invention vont apparaître à la lecture de la description qui va suivre, donnée à titre uniquement illustratif et non limitatif, et à laquelle sont est annexées :
- la figure 1 qui illustre un moteur à combustion interne avec son dispositif de suralimentation utilisé selon l'invention ;
- la figure 2 qui illustre une variante du moteur à combustion interne avec son dispositif de suralimentation selon la figure 1 ;
- les figures 3 à 9 montrent des exemples de stratégie de gestion des moyens de vannage ;
- les figures 10 et 11 montrent des exemples de fonctionnement d'un GMP (Groupe Moto Propulseur) selon l'application de la présente invention.

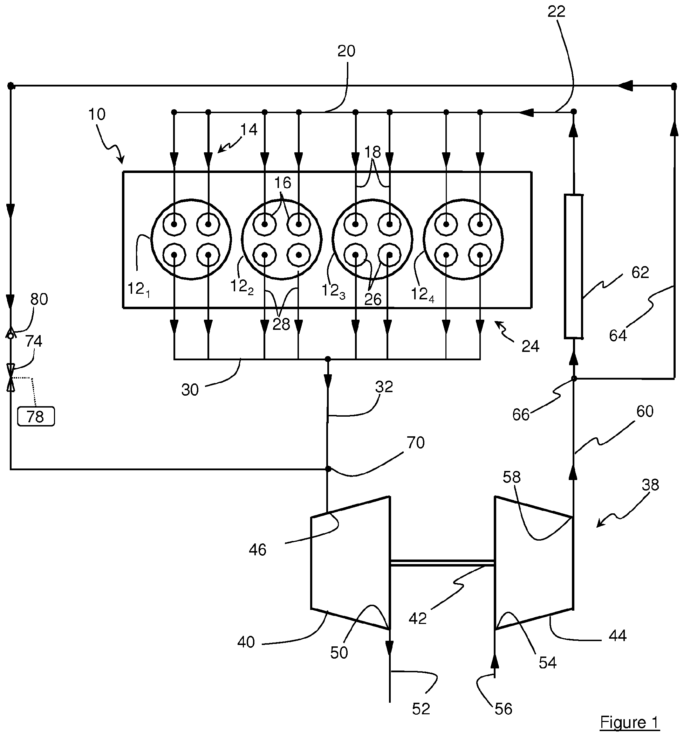

Sur la figure 1, le moteur à combustion interne 10 comprend au moins deux cylindres, ici quatre cylindres référencés 12₁ à 12₄ à partir de la gauche de la figure.

De manière préférentielle, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission 16, ici deux soupapes d'admission contrôlant chacune une tubulure d'admission 18. Les tubulures d'admission 18 aboutissent à un collecteur d'admission 20 alimenté par un conduit d'alimentation 22 en air d'admission, tel que de l'air comprimé.

Ce cylindre comprend aussi des moyens d'échappement des gaz brûlés 24 avec au moins une soupape d'échappement 26, ici également deux soupapes contrôlant chacune une tubulure d'échappement 28.

Dans l'exemple illustré, les tubulures d'échappement de chaque cylindre sont connectées à un collecteur d'échappement 30 avec une sortie de gaz d'échappement 32. Cette sortie de gaz d'échappement aboutit à un turbocompresseur 38 pour la compression de l'air et plus particulièrement à la turbine de détente 40 de ce turbocompresseur.

Comme illustré sur la figure 1, le turbocompresseur est un turbocompresseur à simple entrée, plus connu sous le vocable de turbocompresseur "Mono Scroll" ou "Single Scroll".

Ce type de turbocompresseur comprend la turbine de détente 40 balayée par les gaz d'échappement et qui est reliée en rotation par un arbre 42 avec un compresseur 44.

Au niveau de la turbine, cette dernière comprend une seule entrée 46 des gaz d'échappement qui est raccordée à la sortie de gaz d'échappement 32 du collecteur 30. L'évacuation de gaz 50 de la turbine 40 est raccordée conventionnellement à la ligne d'échappement 52 du moteur.

Le compresseur 44 du turbocompresseur 38 comporte une admission d'air extérieur 54 alimentée par une conduite d'alimentation 56. La sortie d'air comprimé 58 de ce compresseur est reliée au conduit d'alimentation 22 du collecteur d'admission 20 par une conduite 60.

Avantageusement, il peut être prévu de placer un radiateur de refroidissement de l'air comprimé 62 sur la conduite 60, entre le compresseur et la conduite 22.

Comme mieux visible sur la figure 1, un conduit de transfert 64 permet de faire circuler une partie de l'air comprimé sortant du compresseur 44 vers l'entrée 46 de la turbine.

Plus précisément, ce conduit de transfert partiel prend naissance sur la conduite 60, à un point de d'intersection 66 entre le compresseur et le radiateur de refroidissement d'air de suralimentation 62, et aboutit ensuite à l'entrée 46 de la turbine par sa jonction 70 avec la sortie de gaz d'échappement 32.

Ce conduit de transfert porte un moyen de vannage 74, telle qu'une vanne proportionnelle, commandé par un moyen de commande 78. Ce type de vanne proportionnelle permet ainsi de contrôler le débit de la circulation d'air comprimé qui circule dans le conduit de transfert 64.

Avantageusement, le conduit de transfert comporte également un clapet antiretour 80 qui interdit la circulation de l'air comprimé ou des gaz d'échappement de ce conduit vers le compresseur.

L'utilisation de ce clapet présente un autre avantage de l'invention puisqu'il permet un fonctionnement du système de dérivation même lorsque la pression moyenne dans le conduit de transfert 64 est inférieure à la pression moyenne dans la sortie d'échappement 32. Il suffit en effet que les oscillations de pression dans chacune de ces deux branches permettent de disposer ponctuellement d'un différentiel de pression favorable à la dérivation de l'air depuis l'admission vers l'échappement pour que le système de dérivation soit actif, et ce même si les niveaux moyens de pression dans ces deux branches s'opposent à un écoulement de l'admission vers l'échappement.

Cette configuration permet ainsi, pendant le fonctionnement du moteur, de profiter des zones de basse pression échappement régnant ponctuellement dans le collecteur d'échappement pour introduire de l'air comprimé dans la turbine et augmenter ainsi le débit de cette turbine et par conséquent du compresseur, plus communément appelée "Boost Turbo". Cela permet également d'avoir une suralimentation plus efficace pour les bas régimes et notamment de gérer les phases transitoires avec des stratégies de contrôle de la vanne proportionnelle adaptées.

Durant le fonctionnement, en cas de besoin d'air en grande quantité dans les cylindres, la vanne proportionnelle 74 est commandée en ouverture pour introduire de l'air comprimé provenant du compresseur 44 dans la turbine 40.

L'air comprimé sortant du compresseur 44 circule dans le conduit de transfert 64 pour aboutir à l'entrée de gaz d'échappement 46 de la turbine 40 en y apportant un surplus de fluide à cette turbine.

Ainsi, la turbine est parcourue non seulement par les gaz d'échappement venant de la sortie 32, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

La vanne 74 est contrôlée par le moyen de commande 78 de façon à admettre la quantité d'air comprimé dans la turbine selon les besoins de suralimentation du moteur, et en particulier pendant les phases transitoires comprises entre deux phases de fonctionnement stabilisé.

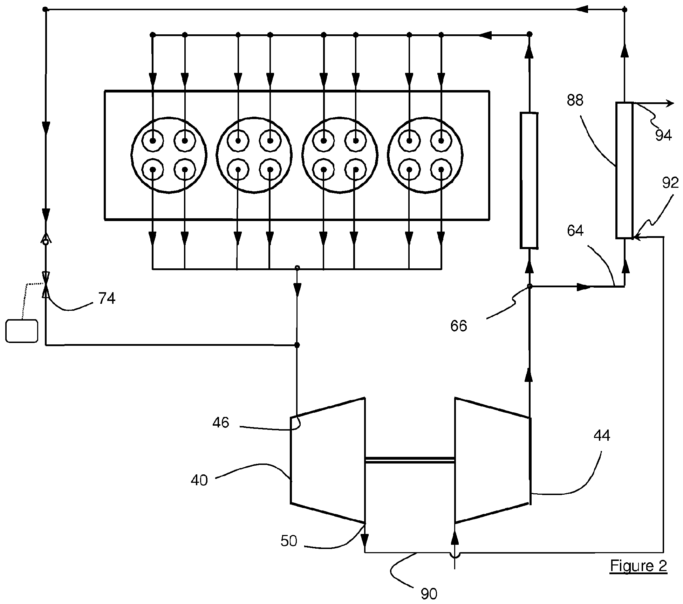

Sur la figure 2, qui comporte pour l'essentiel les mêmes éléments que ceux de la figure 1, l'air comprimé sortant du compresseur 44 et circulant dans le conduit de transfert 64 est réchauffé avant d'être introduit dans la turbine 40.

Pour cela, le conduit de transfert 64 porte un moyen de chauffage 88 de l'air comprimé, ici un échangeur de chaleur sous la forme d'un radiateur de chauffage, placé après le point d'intersection 66 et la vanne 74. Ce radiateur est traversé par l'air comprimé qui circule dans ce conduit tout en étant parcouru par les gaz d'échappement du moteur. Ces gaz d'échappement proviennent de l'évacuation 50 de la turbine et sont amenés par une conduite 90 à l'entrée 92 du radiateur. Les gaz d'échappement parcourent ce radiateur en transférant la chaleur qu'ils contiennent à l'air comprimé pour ensuite ressortir de ce radiateur par la sortie 94 pour être dirigé vers la ligne d'échappement du moteur.

Ainsi, une partie de l'énergie des gaz d'échappement est récupérée par l'air comprimé qui est introduit dans la turbine par l'entrée 46.

Cet air comprimé chauffé permet ainsi d'apporter un surcroit d'énergie à la turbine qui, en conséquence, tournera à une vitesse plus élevée. Cette vitesse de rotation élevée est ensuite transmise au compresseur qui réalisera une compression plus élevée de l'air extérieur.

Le fonctionnement du système décrit ci-dessus, qu'il soit associé ou non à un circuit de recirculation de gaz d'échappement à l'admission, plus communément appelé circuit EGR (Exhaust Gas Recirculation : gaz d'échappement recirculés), nécessite d'être ajusté de manière précise afin de réaliser le taux de court-circuitage souhaité.

Généralement le fonctionnement du moteur peut être assimilé à une succession de phase stabilisées (qui peuvent être plus ou moins longues) entrecoupées par des phases transitoires plus ou moins brutales.

Le pré-positionnement initial de la vanne 74 est issue d'une cartographie régime / charge qui a été préalablement renseignée. De plus, le débit d'air comprimé à l'entrée de la turbine est estimé grâce aux mesures et/ou estimateurs préalablement définis.

La présente invention est particulièrement adaptée pour gérer les phases de fonctionnement transitoire entre deux phases de fonctionnement stabilisé.

On entend par "fonctionnement stabilisé" un état dans lequel soit la demande de couple ne varie pas, soit l'ensemble des actionneurs du moteur ne sont pas modifiés, par exemple, lorsque les quantités de carburant injectées sont constantes dans le temps, le taux d'EGR reste constant, l'actionneur du turbocompresseur est dans une même position, etc.

A l'inverse, on entend par "fonctionnement transitoire" la phase au cours de laquelle certains actionneurs sont activés en réponse à une évolution de la demande de puissance de l'utilisateur. On peut décrire par exemple le cas d'une "prise de charge" au cours de laquelle l'utilisateur va demander au moteur de passer d'un état faiblement chargé (peu de couple, peu de puissance) à un état fortement chargé (fort couple, forte puissance). Cette prise de charge peut être réalisée soit à régime moteur constant, soit avec une augmentation simultanée de la charge et du régime. On peut également considérer l'exemple d'une "levée de pied", c'est-à-dire d'une diminution plus ou moins brutale de la demande de couple. Dans chacun de ces cas, les actionneurs du moteur doivent être pilotés afin d'assurer un fonctionnement optimal du groupe moto propulseur (GMP).

Ainsi, durant les phases de fonctionnement stabilisé, deux types de fonctionnements peuvent être envisagés :
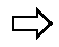 Soit la position de la vanne 74 correspondant au débit de la cartographie initialement renseignée et reste dans cette position tant que la demande de régime / charge est inchangée.
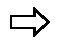 Soit la position de la vanne 74 est ajustée durant toute la période pendant laquelle le moteur reste sur cette phase stabilisée. Dans ce cas, il s'agit de l'ajuster pour obtenir le meilleur compromis entre :
   ∘ La température à l'échappement (demande de réchauffement ou de refroidissement)
   ∘ La richesse échappement (régénération du filtre à particule FAP qui permet le contrôle du taux d'oxygène à l'échappement)
   ∘ La consommation
   ∘ Les émissions de polluants
   ∘ Le besoin en dynamique
   ∘ Les performances

Le taux d'air comprimé dérivé est donc ajusté tout au long de la phase de fonctionnement stabilisée afin d'obtenir le meilleur point de fonctionnement satisfaisant au compromis recherché. La recherche de ce compromis est donc faite sur la base de l'analyse de tout ou partie des mesures ou estimateurs suivants :
▪ Le régime
▪ La charge
▪ La température à l'échappement sortie culasse ou sortie turbine : dans le cas où un critère de température maximale est renseigné
▪ L'historique de dynamique (analyse de l'utilisation) : dans le cadre d'une utilisation très dynamique où les appels de couples sont fréquents ou très fréquents, la position de la vanne 74 peut être positionnée pour privilégier la réponse moteur éventuellement momentanément au détriment d'autres paramètres
▪ La régénération du Filtre A Particules (FAP) : dans le cadre d'une régénération FAP l'ouverture de la vanne 74 peut être interdite voir limitée afin de contrôler le débit d'air sur le FAP et ne pas risquer l'emballement de la régénération pouvant conduire à une température trop élevée
▪ La température de post traitement : dans le cas où l'admission d'air comprimé à l'entrée de la turbine peut conduire au désamorçage du post traitement, l'utilisation de celui-ci peut être limité. Toutefois, dans le cas où l'historique de dynamique montre une probabilité importante que la phase stabilisée soit suivie d'une montée en charge, le critère de dynamique peut être privilégié.
▪ La température moteur (Température eau / Température huile)
▪ La température de l'air
▪ Le temps de stabilisation : suivant la durée de fonctionnement du point stabilisé, la stratégie d'admission d'air comprimé à l'entrée de la turbine peut être revue. Par exemple l'historique de dynamique peut montrer un fonctionnement très « dynamique » que le temps de stabilisation sur le point peut contredire

La vanne est donc positionnée de manière à obtenir le débit d'air comprimé dérivé visé corrigée ou non grâce aux estimateurs.

De plus, il est prévu d'optimiser la dynamique du moteur lors d'un fonctionnement transitoire en contrôlant l'ouverture et la fermeture de la vanne 74 permettant le passage des gaz du conduit de transfert partiel d'air comprimé vers l'entrée 46 de la turbine 40.

De façon générale, ces phases transitoires peuvent être définies comme étant des phases de transition entre deux états stabilisés pour lesquels le niveau de balayage, permis par la vanne proportionnelle 74, est stabilisé et optimal du point de vue des performances moteur attendues sur chacun de ces points de fonctionnement. Le contrôle optimal de la vanne du conduit de transfert partiel consiste à appliquer une stratégie déterminée de l'évolution de la trajectoire de fermeture ou d'ouverture de la vanne afin de passer d'un état stabilisé à un autre état stabilisé dans des conditions optimisées.

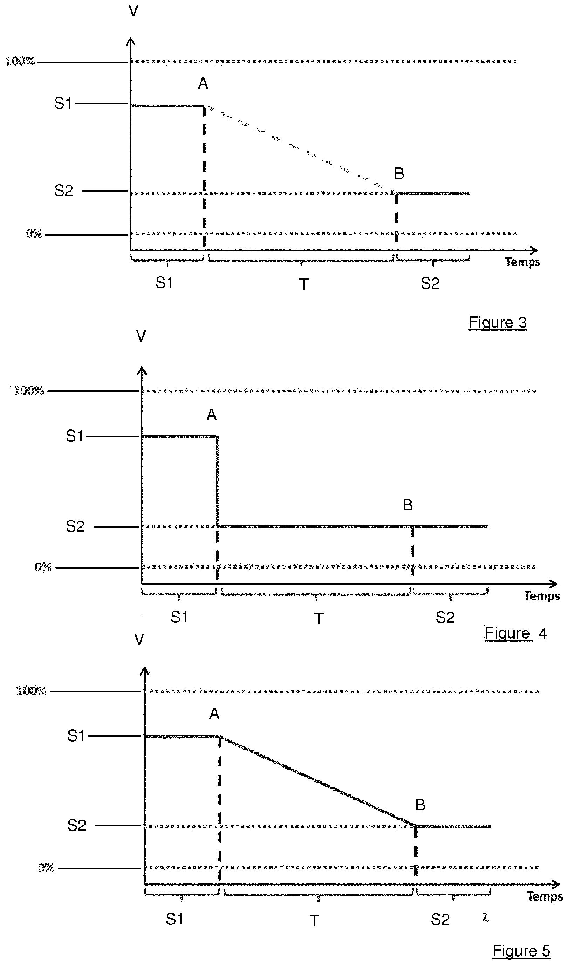

La figure 3 illustre schématiquement cette situation de transition entre les points A, représentatif du point stabilisé avant la phase transitoire, et B, représentatif du point stabilisé après la phase transitoire. Le point A peut correspondre par exemple au début d'une prise de charge, et le point B à l'instant à partir duquel le couple désiré est atteint. Cela peut également illustrer une diminution de charge entre A et B. La phase transitoire sera quant à elle représentée sur les figures suivantes qui décrivent des exemples de plusieurs stratégies pour gérer de façon optimale le passage entre les deux états stabilisés A et B.

Sur la figure 3, " 100%" et " 0% " marquent respectivement l'ouverture et la fermeture totale du passage des gaz dans la vanne 74. Ainsi, la méthode de gestion des phases de transitoires consiste à appliquer des stratégies déterminées comportant au moins une séquence d'ouverture (et/ou de fermeture) de la vanne proportionnelle pour obtenir un fonctionnement optimisé du compresseur 44 mu par la turbine 40 pour passer d'un état stabilisé à un autre.

Les figures 4 à 9 illustrent différents exemples de gestion du niveau de balayage au cours de la phase transitoire. Par " niveau de balayage ", on désigne ici les quantités de gaz introduites par le conduit de transfert 64 partiel d'air comprimé dans l'entrée de la turbine.

La figure 4 correspond au cas d'un " balayage " coupé subitement lors du début de la phase transitoire en A pour le positionner sur le réglage correspondant au point de fonctionnement stabilisé B. On note que le fait de couper le " balayage " subitement ne signifie pas que le moteur atteint son second point B de fonctionnement stabilisé tout de suite.

La figure 5 correspond au cas d'un " balayage " coupé de façon progressive, sensiblement linéaire ou non, au cours de la phase transitoire.

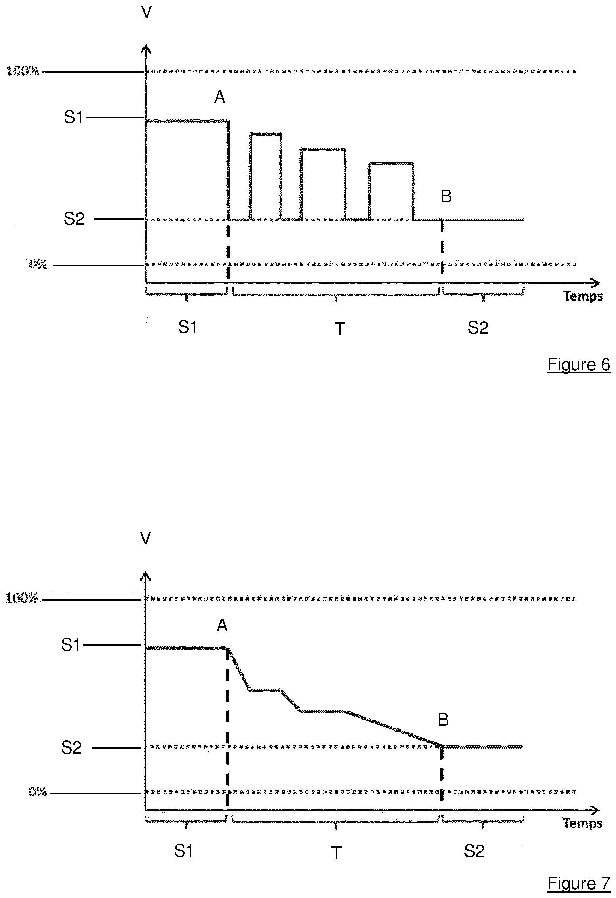

La figure 6 correspond au cas d'une stratégie de " balayage " hachée au cours de la phase transitoire. On réalise ici plusieurs séquences d'ouverture et de fermeture de la vanne proportionnelle entre les positions de la vanne pendant les phases stabilisées A et B.

La figure 7 correspond au cas d'un " balayage " coupé progressivement et maintien de paliers au cours de la phase transitoire.

Le choix de la méthode optimale de gestion de la vanne proportionnelle 74 au cours de la phase transitoire dépend essentiellement des caractéristiques du point de fonctionnement stabilisé de départ (point A) et de celles du point de fonctionnement stabilisé ciblé (point B). En d'autres termes, la stratégie de contrôle de la vanne proportionnelle doit être optimisée pour correspondre au mieux aux caractéristiques des points de fonctionnement du moteur (charge, régime, débit, richesse, temps passés sur chaque point de fonctionnement, etc.) et de la suralimentation (régime de rotation, garde au pompage, etc.).

On peut décrire en exemple le cas d'une prise de charge, c'est-à-dire d'une augmentation rapide de la demande de puissance au moteur. On considère pour cet exemple un cas de fonctionnement transitoire en trois phases principales :
- phase 1: moteur stabilisé sur un point de fonctionnement à faible charge ;
- phase 2: transitoire de prise de charge ;
- phase 3: moteur stabilisé sur un point de fonctionnement à forte charge (charge supérieure à celle de la première phase à "faible" charge).

On considère que le " balayage " est actif à la fois sur le premier point de fonctionnement à faible charge (première phase), et sur le second point de fonctionnement à forte charge avec un niveau qui peut être différent de celui de la première phase en fonction des besoins du moteur propres à ce niveau de charge. Il est également envisagé d'autoriser le balayage au cours du transitoire, à des niveaux variables, selon les exemples illustrés précédemment.

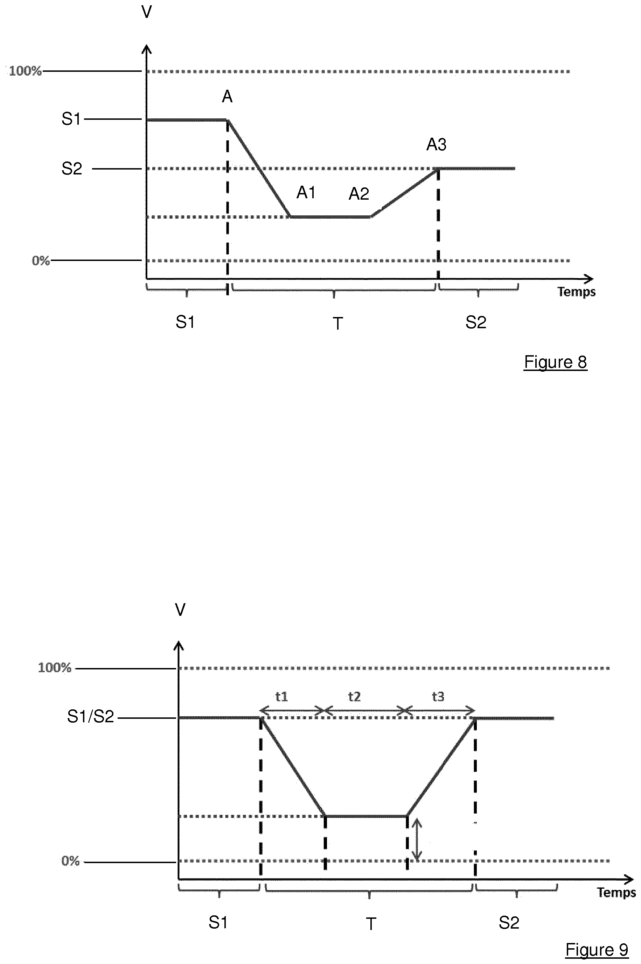

La figure 8 illustre schématiquement le cas de prise de charge avec une gestion simplifiée du balayage. Dans un premier temps, le balayage est d'abord progressivement coupé en début de transitoire (trajectoire A-A1), puis on conserve un palier à un certain niveau de " balayage " en cours de transitoire (trajectoire A1-A2), et on augmente progressivement le " balayage " en fin de transitoire (trajectoire A2-A3).

La figure 9 illustre l'exemple dans lequel les deux phases stabilisées sont opérées à un même niveau de " balayage ", c'est-à-dire aux mêmes réglages de la vanne proportionnelle. On considère que seul le niveau de fermeture au cours du transitoire peut être modifié. Cette stratégie repose sur 4 paramètres : le délai de coupure du balayage (t1), la durée de coupure (i.e. le temps passé à balayage réduit ou interdit, t2), le délai de remise en marche du balayage (t3) et le "niveau" de coupure.

Les réalisations montrent qu'il y a un compromis à trouver entre :
- une remise en route rapide du " balayage » qui peut conduire à un "trou" de couple (lié aux équilibres de pression admission / échappement, au taux de résiduels, etc.) ;
- un arrêt prolongé du système de " balayage " qui peut conduire à une diminution du régime de rotation de la turbine, diminution qui peut affecter ensuite toute la dynamique lorsque le " balayage " est à nouveau autorisé.

Une stratégie optimale identifiée jusqu'alors consiste :
- à couper le balayage très rapidement en début de phase transitoire afin d'obtenir une montée rapide de la charge. En effet, puisque le point de fonctionnement à "faible charge" permet le balayage, le moteur dispose d'une bonne marge de richesse pour enrichir le mélange rapidement et monter en charge (sans toutefois émettre de fumées) ;
- à couper ensuite partiellement le balayage peu de temps (environ 0.2 à 0.3 seconde sur les cas simulés) pour ne pas écrouler le régime de rotation de la turbine (une coupure partielle permet a priori de conserver un débit et de maintenir le régime turbine pendant la phase transitoire) ;
- et finalement à remettre le balayage en route "doucement" pour ne pas faire apparaître de "trou" de couple.

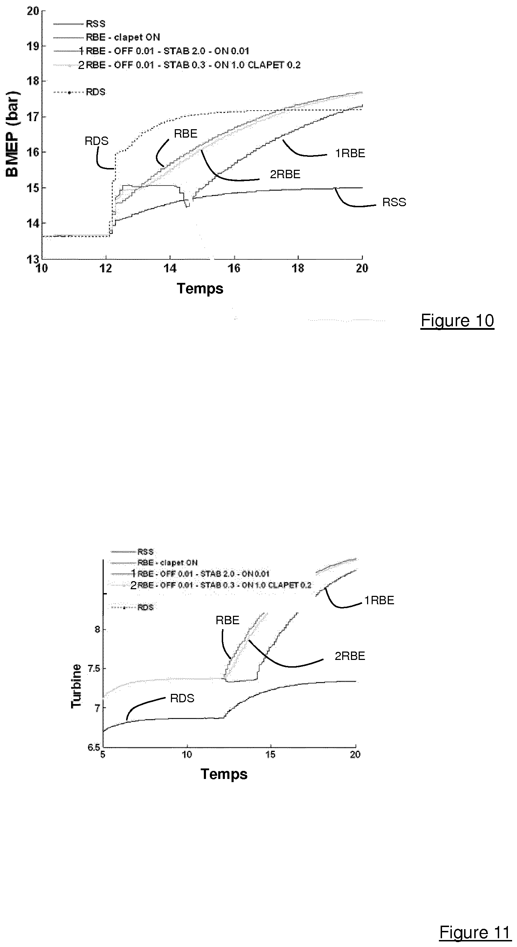

Cette stratégie optimale ainsi que d'autres cas simulés sont illustrés sur la figure 10. La courbe "RSS" correspond au fonctionnement de référence "Référence Simple Suralimentation". La courbe "RDS" correspond à un cas de "Référence Double Suralimentation", cas asymptotique mentionné sur cette figure uniquement à titre indicatif, le système de balayage permettant a priori à un moteur simple suralimentation de gagner en performances sans toutefois atteindre celles d'un moteur à double suralimentation.

Les autres courbes correspondent à un moteur doté d'une simple suralimentation équipe d'un système de transfert partiel d'air comprimé ou dit « balayage », selon l'invention. La courbe "RBE" (pour Référence Balayage Externe) correspond au cas autorisant le balayage en continu, c'est-à-dire, sur le point de faible charge, pendant la phase transitoire, et sur le point de forte charge.

La courbe "1 RBE - OFF 0.01 - STAB 2.0 - ON 0.01" correspond à un cas où le délai de coupure du balayage est de 0.01 seconde, la durée d'interdiction du balayage est de 2.0 secondes, et le délai de remise en route du balayage est de 0.01 seconde. On constate sur ce cas qu'un "trou" de couple apparaît lors de la remise en route du balayage car celui-ci a été arrêté trop longtemps.

La courbe "2RBE - OFF 0.01 - STAB 0.3 - ON 0.2" correspond finalement à un cas optimal où le délai de coupure du balayage est de 0.01 seconde, la durée d'interdiction du balayage est de 0.2 secondes, et le délai de remise en route du balayage est de 0.2 seconde. Comme on peut le constater sur cette figure, cette stratégie du contrôle du balayage permet d'obtenir une montée rapide en charge.

La figure 11 illustre l'évolution du régime de la turbine 40. On observe notamment la légère chute de régime correspondant au cas qui interdit trop longuement le balayage.

Comme indiqué précédemment, la stratégie de contrôle optimale varie d'un moteur à un autre, les valeurs des différents paramètres de contrôle indiquées ici ne sont donc fournies qu'à titre indicatif.

## Revendications

1. Méthode de contrôle de la quantité d'air introduit à l'admission d'un moteur à combustion interne suralimenté, ledit moteur comprenant une sortie de gaz d'échappement (32) reliée à un collecteur d'échappement (30), comprenant un dispositif de suralimentation (38) comportant un turbocompresseur avec une turbine (40) à simple entrée (46) connectée à ladite sortie de gaz d'échappement ainsi qu'un compresseur (44) d'air extérieur, et un conduit de transfert partiel (64) de l'air comprimé du compresseur vers l'entrée de la turbine, où l'on relie le conduit de transfert partiel (64) à l'entrée de la turbine, ledit conduit comportant un moyen de vannage proportionnel (74), et en ce que l'on contrôle la circulation de l'air comprimé dans ce conduit pendant des phases de fonctionnement transitoire selon des stratégies appliquées audit moyen de vannage, et déterminées en fonction des caractéristiques des phases stabilisées, **caractérisée** en que :
- pour une stratégie de contrôle, on effectue les étapes suivantes :
- à partir d'un état de réglage d'ouverture du moyen de vannage pour un état stabilisé initial,
- on diminue le réglage selon un gradient déterminé, jusqu'à une valeur maintenue un temps t,
- on augmente ledit réglage selon un gradient déterminé pour atteindre le réglage d'ouverture du moyen de vannage pour un état stabilisé final.

2. Méthode selon la revendication 1, **caractérisée en ce que** l'on dispose en outre un clapet antiretour (80) sur le conduit (64).

3. Méthode selon la revendication 1 ou 2, **caractérisée** en que l'on chauffe l'air comprimé qui circule dans le conduit de transfert (64).

4. Méthode selon la revendication 3, dans laquelle on chauffe l'air comprimé qui circule dans le conduit de transfert par échange de chaleur avec les gaz d'échappement avec un moyen de chauffage (88).

5. Méthode selon l'une des revendications 1-4, dans laquelle l'état initial est à faible charge et l'état final à forte charge.

6. Méthode selon l'une des revendications 1-5, dans lequel les états de réglage d'ouverture du moyen de vannage pour les états stabilisés initial et final sont identiques.

## Patentansprüche

1. Verfahren zur Steuerung der Luftmenge, die am Einlass eines aufgeladenen Verbrennungsmotors zugeführt wird, wobei der Motor einen Abgasauslass (32) umfasst, der mit einem Abgaskrümmer (30) verbunden ist, eine Aufladevorrichtung (38) umfasst, die einen Turboverdichter mit einer Turbine (40) mit Einzeleinlass (46), die an den Abgasauslass angeschlossen ist, sowie einen Außenluftverdichter (44) und eine Leitung zur teilweisen Übertragung (64) der verdichteten Luft vom Verdichter zum Einlass der Turbine aufweist, wo die Leitung zur teilweisen Übertragung (64) mit dem Einlass der Turbine verbunden wird, wobei die Leitung ein Proportionalventilmittel (74) aufweist, und dadurch, dass die Zirkulation der verdichteten Luft in dieser Leitung während Übergangsbetriebsphasen gemäß Strategien gesteuert wird, die auf das Ventilmittel angewandt und je nach den Eigenschaften der stabilisierten Phasen bestimmt werden, **dadurch gekennzeichnet, dass**:
- für eine Steuerungsstrategie die folgenden Schritte durchführt werden:
- ausgehend von einem Öffnungsregelungszustand des Ventilmittels für einen stabilisierten Ausgangszustand,
- wird die Regelung gemäß einem bestimmten Gradienten auf einen Wert verringert, der eine Zeit t beibehalten wird,
- wird die Regelung gemäß einem bestimmten Gradienten erhöht, um die Öffnungsregelung des Ventilmittels für einen stabilisierten Endzustand zu erreichen.

2. Verfahren nach Anspruch 1, **dadurch gekennzeichnet, dass** ferner ein Rückschlagventil (80) in der Leitung (64) angeordnet wird.

3. Verfahren nach Anspruch 1 oder 2, **dadurch gekennzeichnet, dass** die verdichtete Luft, die in der Übertragungsleitung (64) strömt, erwärmt wird.

4. Verfahren nach Anspruch 3, wobei die verdichtete Luft, die in der Übertragungsleitung zirkuliert, durch Wärmeaustausch mit den Abgasen mit einem Heizmittel (88) erwärmt wird.

5. Verfahren nach einem der Ansprüche 1 bis 4, wobei der Ausgangszustand mit geringer Aufladung und der Endzustand mit starker Aufladung ist.

6. Verfahren nach einem der Ansprüche 1 bis 5, wobei die Öffnungsregelungszustände des Ventilmittels für den stabilisierten Ausgangs- und Endzustand identisch sind.

## Claims

1. Method for controlling the quantity of air introduced at the intake of a supercharged internal combustion engine, said engine comprising an exhaust gas outlet (32) linked to an exhaust manifold (30), comprising a supercharging device (38) comprising a turbocompressor with a turbine (40) with single inlet (46) connected to said exhaust gas outlet and an outside air compressor (44), and a pipe (64) for partial transfer of the compressed air from the compressor to the inlet of the turbine, in which the partial transfer pipe (64) is linked to the inlet of the turbine, said pipe comprising a proportional valving means (74), and in that the circulation of the compressed air in this pipe during transient operating phases is controlled according to strategies applied to said valving means, and determined as a function of the characteristics of the stabilized phases, **characterized in that**:
- for a control strategy, the following steps are performed:
- from a state of setting of opening of the valving means for an initial stabilized state,
- the setting is decreased according to a determined gradient, to a value maintained a time t,
- said setting is increased according to a determined gradient to reach the setting of opening of the valving means for a final stabilized state.

2. Method according to Claim 1, **characterized in that** there is also a non-return valve (80) on the pipe (64).

3. Method according to Claim 1 or 2, **characterized in that** the compressed air which circulates in the transfer pipe (64) is heated.

4. Method according to Claim 3, wherein the compressed air which circulates in the transfer pipe is heated by heat exchange with the exhaust gases with a heating means (88) .

5. Method according to one of Claims 1 to 4, wherein the initial state is at low load and the final state is at high load.

6. Method according to one of Claims 1 to 5, wherein the states of setting of opening of the valving means for the initial and final stabilized states are identical.
